# EUROPÄISCHE PATENTANMELDUNG

(11) **EP 1 583 022 A2**
(43) Veröffentlichungstag der Anmeldung: **05.10.2005**
(21) Anmeldenummer: 05006353.6
(22) Anmeldetag: 23.03.2005
(51) Int. Cl.: G06K 9/00

(54) **Verfahren und Anordnung zur Aufnahme interessierender Bereiche von beweglichen Objekten**

(30) Priorität: 29.03.2004 DE 102004015806
(71) Anmelder: Smiths Heimann Biometrics GmbH, 07743 Jena (DE)
(72) Erfinder: Richter, Uwe, 07747 Jena (DE)
(74) Vertreter: Freitag, Joachim

(57) **Zusammenfassung**

Die Erfindung betrifft ein Verfahren und eine Anordnung zur Aufnahme interessierender Bereiche von beweglichen Objekten, vorzugsweise von Personen.

Die Aufgabe, eine neue Möglichkeit zur Aufnahme hochaufgelöster elektronischer Bilder der Gesichter (11) von Personen (1) zu finden, die schnell und ohne manuelle Bedienereingriffe bei optimalen Einstellungen der Kamera (2) Gesichtsaufnahmen hoher Qualität erreicht, wird erfindungsgemäß gelöst, indem der Bildsensor (25) in Vollbild- und Teilbildmodus umschaltbar ist, wobei im Vollbildmodus über ein Weitwinkelobjektiv (24) eine Überblicksaufnahme (Vollbild 51) und im Teilbildmodus der interessierende Bereich (Gesicht 11) einer Person (1) aufgenommen, das Vollbild (51) mittels einer Bildauswerteeinheit (5) auf Vorhandensein und Lage von Objektmerkmalen (52; 11; 12), einer Person (1) analysiert und daraus ein umschreibendes Rechteck (53) bestimmt wird, und das ermittelte umschreibende Rechteck (53) als Begrenzung eines programmierbaren Auslesefensters des Bildsensors (25) verwendet wird, um im Teilbildmodus eine Folge von Teilbildern (54), die das Gesicht (11) der Person (1) formatfüllend enthalten, mit hoher Bildrate auszulesen.

## Beschreibung

Die Erfindung betrifft ein Verfahren und eine Anordnung zur Aufnahme interessierender Bereiche von beweglichen Objekten, vorzugsweise von Personen, wobei mit einem aus einem Bildsensor ausgelesenen Bild ein interessierender Bereich des Objekts für das Ausgabebild formatfüllend verfolgt wird. Die Erfindung findet vorzugsweise bei der Personenidentifikation Anwendung.

Während der erkennungsdienstlichen Erfassung einer Person durch die Polizei werden neben textformatigen Angaben (Name, Geburtsort) und Fingerabdrücken auch Bilder des Gesichts (Porträt) aufgenommen. Diese Bilder werden zur Identifikation der Person verwendet und in Datensammlungen dazu abgelegt, um sie später für Vergleiche dieser Bilder mit anderen Bildern zur Verfügung zu haben. Der Vergleich soll dann zeigen, ob eine Übereinstimmung besteht, also auf dem vom Erkennungsdienst aufgenommenen Bild und einem zum Vergleich verwendeten Bild (beispielsweise das Foto in einer Datenbank) die gleiche Person abgebildet ist oder nicht. Damit dieser Vergleich sicher durchgeführt werden kann, muss das Bild entsprechende Qualitätseigenschaften aufweisen. Dazu zählt, dass das Gesicht möglichst formatfüllend im Bild enthalten ist und alle Details (Mund, Nase, Augen, Haut) einwandfrei zu erkennen sind. Das Gesicht muss dazu gleichmäßig gut ausgeleuchtet sein und in bestimmten Posen aufgenommen sein (frontal, Profil).

Während diese Bilder traditionell mit Fotokameras gemacht wurden, sind in modernen Systemen elektronische Kameras im Einsatz. In typischen Konfigurationen handelt es sich dabei um elektronische Kameras die ständig Livebilder liefern und diesen Strom von Bildern über eine Schnittstelle an einen Computer liefern. Das Livebild wird auf dem Bildschirm des Computers zur Anzeige gebracht. Damit kann der Benutzer die Kamera anhand des Livebildes so ausrichten und auch die Beleuchtung so einstellen, dass die gewünschte Qualität der Aufnahme gesichert wird. Bei einer großen aufzunehmenden Person wird der Bediener also die Kamera nach oben schwenken, um das Gesicht vollständig und formatfüllend ins Bild zu bekommen, bei einer kleinen Person wird die Kamera entsprechend nach unten geschwenkt. Sollte das Gesicht auf dem Bildschirm zu dunkel erscheinen, dann muss der Bediener die Empfindlichkeit der Kamera oder, falls möglich, die Helligkeit der Beleuchtung erhöhen. Der Bediener wird das Bild erst dann speichern, wenn er mit der Qualität zufrieden ist.

Im polizeilichen Einsatz sind dazu gemäß dem Stand der Technik Kameras im Einsatz, welche über Steuerkommandos sowohl motorisch betrieben geschwenkt (auf-/abwärts, rechts/links) als auch in ihrem Sichtfeld motorisch gezoomt (hinein/heraus) werden können. Die Zoomeinstellung des Objektivs der Kamera kann zu Beginn so eingestellt sein, dass die gesamte Person vollständig auf dem Kameralivebild zu sehen ist. Der Bediener wird dann die Kamera so nach oben schwenken, dass der Kopf im Zentrum des Bildes zu liegen kommt. Danach wird er hineinzoomen, bis der Kopf - wie gefordert - formatfüllend im Livebild zu sehen ist. Die Kameraverstellung kann dabei durch den Bediener manuell mittels eines Kamerasteuerteils vorgenommen werden. Eine sehr oft dafür verwendete kommerziell erhältliche Kamera ist das Modell EVI-D100 der Firma Sony Corp. (Japan).

Mitunter werden auch automatische Verfahren eingesetzt, um eine solche Kamera einzurichten. Die US 6,593,962 beschreibt beispielsweise ein System, bei dem zunächst in einem Kalibriermode die Kamera auf einen Hintergrund gerichtet wird und die Zoomeinstellung und das Zentrum des Hintergrundes darauf abgeglichen werden. Danach wird eine Person vor den Hintergrund gestellt und ein Bild mit der Kamera erfasst sowie in diesem Bild die Position des Gesichts ermittelt. Die Helligkeit kann über die Blende des Objektivs an der Kamera ebenfalls eingestellt werden. Erst nachdem all diese Einstellungen erfolgt sind und damit die Anordnung kalibriert ist, kann mit der Aufnahme von Personen begonnen werden. Dabei wird dann die Position des Gesichts im Bild ermittelt und die Kamera von einem Computer gesteuert nach unten oder oben geschwenkt.

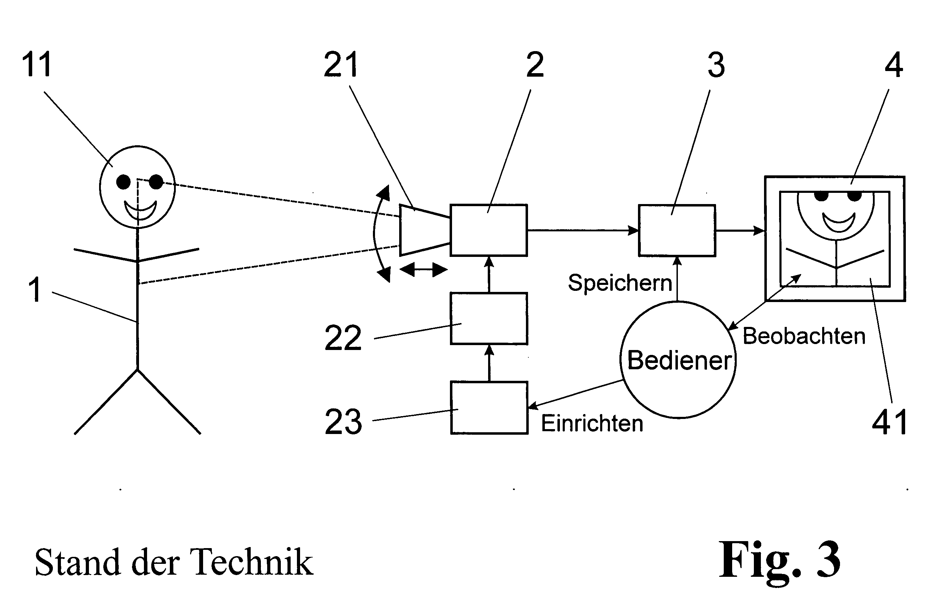

Bei den oben beschriebenen bekannten Lösungen handelt es sich einerseits um einen interaktiven Vorgang zur Optimierung der Kameraeinstellungen, bei dem der Bediener die zentrale Rolle innehat (siehe auch zur Verdeutlichung Fig. 3). Das Ergebnis kann nur so gut sein und nur so schnell erreicht werden, wie dies dem Bediener möglich ist (z.B. durch mehrfache Wiederholung des Vorgangs). Während dieser Zeit ist die Aufmerksamkeit des Bedieners auf diese technischen Einstellungen konzentriert, was in der Praxis der Polizeiarbeit problematisch sein kann, wenn die zu erfassende Person nicht kooperativ ist und beispielsweise aggressiv reagiert.
Auch im Falle von computergesteuerten Schwenk- und Zoomeinstellungen der Kamera, die motorisch betriebene Verstellmechanismen für Kamera und Optik erfordern, dauert der Einstellvorgang einige Zeit, die mitunter aufgrund von Bewegungen der Person oder Störfaktoren (z.B. zweite Person) sehr lang sein kann.

Der Erfindung liegt die Aufgabe zugrunde, eine neue Möglichkeit zur Aufnahme hochaufgelöster elektronischer Bilder der Gesichter von Personen zu finden, die schnell und ohne manuelle Bedienereingriffe bei optimalen Einstellungen der Kamera Gesichtsaufnahmen hoher Qualität erreicht. Des weiteren soll eine Lösung gefunden werden, mit der auch mehrere Gesichter im ausgedehnten Bildfeld einer Weitwinkelkamera quasi gleichzeitig vollformatig erfasst werden können.

Erfindungsgemäß wird die Aufgabe bei einem Verfahren zur Aufnahme interessierender Bereiche von beweglichen oder wechselnden Objekten, vorzugsweise der Gesichter von Personen, bei dem mit einem aus einem Bildsensor ausgelesenes Bild ein interessierender Bereich des Objekts für das Ausgabeformat bildfüllend verfolgt wird, dadurch gelöst, dass der Bildsensor sequenziell umschaltbar in einem Vollbild- und einem Teilbildmodus betrieben wird, wobei im Vollbildmodus über ein Weitwinkelobjektiv ein Bild als feststehende Überblicksaufnahme und im Teilbildmodus der interessierende Bereich des Objekts aufgenommen werden, dass das im Vollbildmodus erfasste Bild mittels einer Bildauswerteeinheit auf Vorhandensein und Lage vorgegebener Objektmerkmale, vorzugsweise des Gesichts einer Person, analysiert wird und aus der Lage von aufgefundenen Objektmerkmalen ein umschreibendes Rechteck um den durch die aufgefundenen Objektmerkmale definierten interessierenden Bereich des Objekts bestimmt wird, dass das aktuell ermittelte umschreibende Rechteck als Begrenzung eines programmierbaren Auslesefensters des Bildsensors verwendet wird und dass im Teilbildmodus auf Basis des aktuell eingestellten Auslesefensters des Bildsensors eine Folge von Teilbildern, die den interessierenden Bereich des Objekts formatfüllend enthalten, mit hoher Bildrate ausgelesen wird.

Vorteilhaft werden im Teilbildmodus ausgelesene Teilbilder darauf analysiert, ob sich vorgegebene Objektmerkmale in nacheinander ausgelesenen Teilbildern bewegen, und bei erkannter Verschiebung der Objektmerkmale von einem .Teilbild zu einem vorhergehenden die Lage des umschreibenden Rechtecks angepasst verschoben wird, um den interessierenden Bereich des Objekts vollständig innerhalb des nachfolgend ausgelesenen Teilbildes zu halten.
Zweckmäßig wird in den Vollbildmodus zurückgeschaltet, wenn eine Grenze des das verschobene Teilbild umschreibenden Rechtecks den Rand der Vollbildaufnahme erreicht oder überschreitet, und es werden erneut die Existenz und Lage der vorgegebenen Objektmerkmale bestimmt.
In einer weiteren Variante kann vom Teilbildmodus in den Vollbildmodus zurückgeschaltet werden, wenn wenigstens ein zur Bestimmung des umschreibenden Rechtecks verwendetes Objektmerkmal im Teilbild verschwindet.

Es erweist sich als Vorteil, zusätzlich zur Lage auch die Helligkeit des Objektmerkmals im Bild zu ermitteln, einen Vergleich mit einer als optimal definierten Referenzhelligkeit vorzunehmen und bei Abweichungen von der Referenzhelligkeit eine Anpassung der Signalerfassung vorzunehmen. Das geschieht vorzugsweise, indem die Empfindlichkeitseinstellungen des Bildsensors und/oder die Verstärkung der A/D-Wandlung des Bildsensorsignals geändert werden. Weiterhin kann es zweckmäßig sein, die elektronische Verschlusszeit des Bildsensors zu regeln und/oder die Blendeneinstellung der Kamera zu ändern.

Weiterhin wird die Aufgabe bei einem Verfahren zur Aufnahme interessierender Bereiche von beweglichen oder wechselnden Objekten, vorzugsweise von Personen, bei dem mit einem aus einem Bildsensor ausgelesenes Bild ein interessierender Bereich eines Objekts für das Ausgabeformat bildfüllend verfolgt wird, erfindungsgemäß dadurch gelöst, dass der Bildsensor sequenziell umschaltbar in einem Vollbild- und einem Teilbildmodus betrieben wird, wobei im Vollbildmodus ein Bild als feststehende Überblicksaufnahme gemacht wird und im Teilbildaufnahmemodus der interessierende Bereich eines Objekts aufgenommen wird, dass das im Vollbildaufnahmemodus erfasste Bild mittels einer Bildauswerteeinheit auf Vorhandensein und Lage vorgegebener definierter Objektmerkmale, vorzugsweise Gesichter von Personen, analysiert wird und aus der Lage von aufgefundenen vorgegebenen Objektmerkmalen umschreibende Rechtecke um durch die vorgegebenen Objektmerkmale definierte interessierende Bereiche von allen aufgefundenen Objekten bestimmt wird, dass für alle Objekte, vorzugsweise mehrere Personen, die mit dem Bildsensor im Vollbildmodus erfasst wurden, die aktuell ermittelten umschreibenden Rechtecke als Begrenzung unterschiedlicher programmierbarer Auslesefenster des Bildsensors verwendet werden, dass im Teilbildaufnahmemodus auf Basis der aktuell eingestellten Mehrzahl von Auslesefenstern der Bildsensor in einen repetierenden Multiteilbildaufnahmemodus mit den ermittelten umschreibenden Rechtecken geschaltet wird und Bildsequenzen von Teilbildern mit jeweils nacheinander formatfüllend ausgelesenen interessierenden Bereichen der Objekte ausgegeben werden.

Vorteilhaft wird der repetierende Multiteilbildaufnahmemodus beendet und der Bildsensor in den Vollbildaufnahmemodus zurückgeschaltet, wenn in einem der Teilbilder wenigstens ein vorgegebenes Objektmerkmal verschwunden ist, so dass im Vollbild erneut Vorhandensein und Lage der interessierenden Bereiche von Objekten bestimmt werden, um in einem neuen repetierenden Multiteilbildmodus aktuelle interessierende Bereiche formatfüllend auszugeben.
In einer weiteren zweckmäßigen Gestaltung wird der repetierende Multiteilbildaufnahmemodus nach einer vorbestimmten Zeit beendet und der Bildsensor in den Vollbildaufnahmemodus zurückgeschaltet, so dass regelmäßig im Vollbild erneut Vorhandensein und Lage die interessierenden Bereiche von Objekten bestimmt werden, um in einem neuen repetierenden Multiteilbildmodus aktuelle interessierende Bereiche formatfüllend auszugeben.

Die Aufgabe der Erfindung wird ferner bei Anordnung zur Aufnahme interessierender Bereiche von beweglichen oder wechselnden Objekten, vorzugsweise von Personen, enthaltend eine Kamera mit einem Objektiv, einem Bildsensor, einer Sensorsteuereinheit, einer Bildspeichereinheit und einer Bildausgabeeinheit, dadurch gelöst, dass das Objektiv ein Weitwinkelobjektiv ist, dass der Bildsensor ein Sensor mit variabel programmierbarem Auslesefenster ist, der bei Auslesung eines programmierten Teilbildes die volle örtliche Auflösung, aber gegenüber dem Vollbildauslesemodus eine wesentlich verkürzte Auslesezeit aufweist, und zwischen Vollbild- und Teilbildmodus beliebig umschaltbar ist, dass eine Bildauswerteeinheit zur Auswertung der im Vollbildmodus aufgenommenen Vollbilder vorgesehen ist, wobei aus den Vollbildern das Vorhandensein und die Lage vorgegebener definierter Objektmerkmale bestimmbar und aus der Lage von aufgefundenen Objektmerkmalen um die Objektmerkmale herum interessierende Bereiche in Form eines umschreibenden Rechtecks definiert sind, und dass die Bildauswerteeinheit über eine Sensorsteuereinheit mit dem Bildsensor in Verbindung steht, um die berechneten umschreibenden Rechtecke zur variablen Steuerung des Auslesefensters im Teilbildmodus des Bildsensors zu verwenden.
Vorteilhaft ist das Weitwinkelobjektiv ein Fix-Fokus-Objektiv. Dabei liegt der feste Fokus zweckmäßig weniger als 1,5 m vor der Kamera.
Als Weitwinkelobjektiv kann aber auch ein Autofokusobjektiv beliebigen Funktionsprinzips verwendet werden.

Vorzugsweise wird als Bildsensor ein hochauflösendes CMOS-Array eingesetzt. Es sind aber ebenso CCD-Arrays mit entsprechender Fensterauslesefunktion geeignet.
Es erweist sich als besonderer Vorzug der Erfindung, dass selbst bei Erfordernis einer Livebildbereitstellung der Bildsensor (bei Vollbildauslesung aller seiner Pixel) eine niedrige Bildrate aufweisen kann, ohne dass dies die geforderte Funktion wesentlich beeinträchtigt. Die Anpassung an etwaige Fernseh- oder VGA-Normen kann dann im Vollbildmodus durch Auslesen mit geringerer Pixeldichte (nur jedes n-te Pixel in Zeilen- und Spaltenrichtung) erreicht werden, im Teilbildmodus wird die geforderte Bildwiederholrate durch Auslesung begrenzter Pixelbereiche ohnehin überboten.

Vorzugsweise enthält die Bildauswerteeinheit Mittel zum Erkennen von Gesichtern von Personen, sogenannte "Face Finder".
Es erweist sich als zweckmäßig, wenn die Bildauswerteeinheit zusätzliche Mittel zum Bewerten der Qualität von aufgefundenen Gesichtern aufweist. Dazu sind vorteilhaft Mittel zum Bewerten der Helligkeit des ausgelesenen Teilbildes in bezug auf die reinen Gesichtsmerkmale und/oder Mittel zum Bewerten der Größenverhältnisse von vorgegebenen Objektmerkmalen vorhanden. Letztere Vorkehrungen sind insbesondere beim Aufnehmen mehrerer Personen im Gesamtbildfeld der Kamera sinnvoll, um eine Auswahl einer begrenzten Anzahl von Gesichtern mittels einer Multiteilbildmodus-Steuerung zu realisieren. Dabei kann es auch vorteilhaft sein, dass eine zusätzliche Ablaufsteuereinheit zur Beeinflussung der Bildauswerteeinheit vorhanden ist, wobei die Ablaufsteuereinheit einen Taktzyklus zur zyklischen Umschaltung der Bildauswerteeinheit zwischen Vollbild- und Teilbildauswertungen aufweist, um ständig die ausgewerteten Objekte bzw. Gesichter von Personen sowohl bezüglich Position und Qualität der Teilbilder als auch bezüglich Neuzugang von Objekten zu aktualisieren.

Die grundlegende Idee der Erfindung basiert auf der Überlegung, dass das wesentliche Problem bei Livebildkameras zur elektronischen Erfassung der Gesichter von Personen (z.B. zur erkennungsdienstlichen Erfassung von Personen oder zur Identifikation bei der Passkontrolle) darin besteht, dass schwenkbare Kameras mit Zoomobjektiv eine Mindestzeit benötigen, um die optimalen Richtungs- und Zoomeinstellungen für eine hochaufgelöste Gesichtsaufnahme zu erreichen. Diese - häufig auch nicht fehlerfreien - Kameraeinstellungen werden gemäß der Erfindung vermieden, indem eine fest montierte Kamera mit einem Weitwinkelobjektiv (vorzugsweise sogar mit fester Brennweite) verwendet wird. Der elektronische Bildsensor (optoelektronischer Wandler) wird mit Mitteln gekoppelt, um einen beliebig großen und beliebig positionierten Ausschnitt seines vollständigen Bildes zu definieren und nachfolgend nur noch diesen Ausschnitt als Bild auszugeben. Dabei werden die Lage und Größe dieses Ausschnitts zunächst im vollständigen Bild mittels spezieller Bildauswertungsverfahren bestimmt. Anschließend wird der Bildsensor in den Teilbildmodus umgeschaltet. Im Teilbild wird die Qualität des Gesichts anhand von Bildanalysekriterien ermittelt und - falls notwendig - weitere Änderungen an der Kameraeinstellung vorgenommen. Mit einmal optimierten Einstellungen des Fensters (Größe, Lage) und der weiteren Kameraparameter (Empfindlichkeit, Farbabgleich) kann nachfolgend die Kamera in einem Livebildmodus betrieben werden und das Gesicht einer Person als formatfüllendes Livebild auf dem Computerbildschirm angezeigt werden. Sollte sich die Person bewegen, kann diese Bewegung im Bild erkannt und die Lage und Größe des Bildausschnitts entsprechend mitgeführt werden.

Mit der erfindungsgemäßen Lösung ist es möglich, qualitativ hochwertige Gesichtsaufnahmen von Personen zu erhalten, ohne dass ein Bediener in den Aufnahmeprozess eingreifen muss. Dadurch wird Kontrollpersonal (z.B. Grenzkontrolle) von ablenkender Tätigkeit entlastet und kann seine Aufmerksamkeit auf die Person und deren Personaldokument richten.
Durch die Eliminierung der motorischen Verstellungen (Schwenken und Zoomen) der Kamera wird der Vorgang der Bildoptimierung schneller und zuverlässiger.

Die Erfindung soll nachstehend anhand von Ausführungsbeispielen näher erläutert werden. Die Zeichnungen zeigen:
- Fig. 1:: eine Prinzipdarstellung des erfindungsgemäßen Verfahrens,
- Fig. 2:: eine zweckmäßige Hardwarevariante für die Voll- und Teilbildsteuerung zur Aufnahme von Gesichtern,
- Fig. 3:: Personenaufzeichnung gemäß dem Stand der Technik,
- Fig. 4:: Ablauf der Bildgewinnung bei Auffinden von zwei (oder mehr) signifikanten Objektbereichen (Multibildmodus).

Fig. 3 zeigt eine Anordnung nach dem Stand der Technik. Die Bildaufnahme wird von einem Operateur (Bediener der Anlage, z.B. Polizei- oder Zollbeamter) durchgeführt, wobei eine schwenkbare Kamera 2 mit Zoomobjektiv 21 vorhanden ist, um das Gesicht 11 einer Person möglichst großflächig (Bildformat füllend) aufzunehmen.
Gemäß der Darstellung von Fig. 3 ist die Kamera 2 zu Beginn zu niedrig ausgerichtet und es wird auf der angeschlossenen Anzeigeeinheit 4 (Computerbildschirm) nur ein Teil des Gesichts 11 sichtbar. Der Bediener erkennt dieses Problem am aktuell angezeigten Bildausschnitt 41 und betätigt daraufhin interaktiv die Steuertasten an der Steuereinheit 23. Der Schwenkantrieb (nur symbolisiert durch gebogenen Doppelpfeil und die Antriebssteuereinheit 22) schwenkt daraufhin die Kamera 2 nach oben. Während dieser Zeit werden laufend neue Bilder mit der festen und nicht veränderlichen Bilddimension von der Kamera 2 geliefert, die vom Sensorchip der Kamera 2 in einen Bildspeicher 3 gelangen. Der Sensorchip der Kamera 2 arbeitet beispielsweise nach dem VGA-Format mit 640 Pixeln horizontal und 480 Pixeln vertikal sowie mit einer Bildwiederholfrequenz von 25 Bildern pro Sekunde. Ein solches Bild wird auch als Livebild bezeichnet. Die Änderung des Kamerabildfeldes während des Schwenkens wird bei einer Kamera 2, die mit Bildwiederholraten im Bereich der üblichen TV-Norm (25 Bilder pro Sekunde) arbeitet, nur gering verzögert, so dass der Bediener das Gefühl hat, dass er sofort auf dem Bildschirm 4 erkennt, wenn die nach oben schwenkende Kamera 2 das Gesicht 11 der aufzunehmenden Person 1 mittig erfasst. Er wird daraufhin die dem Schwenkantrieb zugeordnete Steuertaste der Steuereinheit 23 loslassen und die Kamera 2 ist korrekt ausgerichtet. Danach muss der Bediener bewerten, ob das Gesicht 11 bereits formatfüllend auf dem Bildschirm 4 sichtbar ist, und falls das nicht zutrifft, an der Steuereinheit 23 mittels einer Steuertaste für den Kamerazoomantrieb (nur durch Doppelpfeil am Objektiv 21 und die Antriebssteuereinheit 22 angedeutet) das Bildfeld der Kamera 2 geeignet einengen oder erweitern. Wenn der Bediener glaubt, dass die Person 1 optimal oder zumindest ausreichend gut getroffen ist, löst er die gültige Bildspeicherung aus, die zur Identifikation oder zur Erfassung in einer Datenbank verwendet werden soll.
Problematisch wird es dann, wenn beide Steuervorgänge (Schwenken und Zoomen) schnell und/oder im Wechsel erfolgen müssen, weil sich die Person 1 bewegt. Dann wird der Qualitätsanspruch an die Aufnahme des Gesichts 11 schnell einmal nicht erfüllt, wodurch sich der nachfolgende Vergleichs- oder Katalogisierungsprozess aufwendiger gestaltet oder wegen fehlender Auflösung nicht mehr eindeutig ausgeführt werden kann.

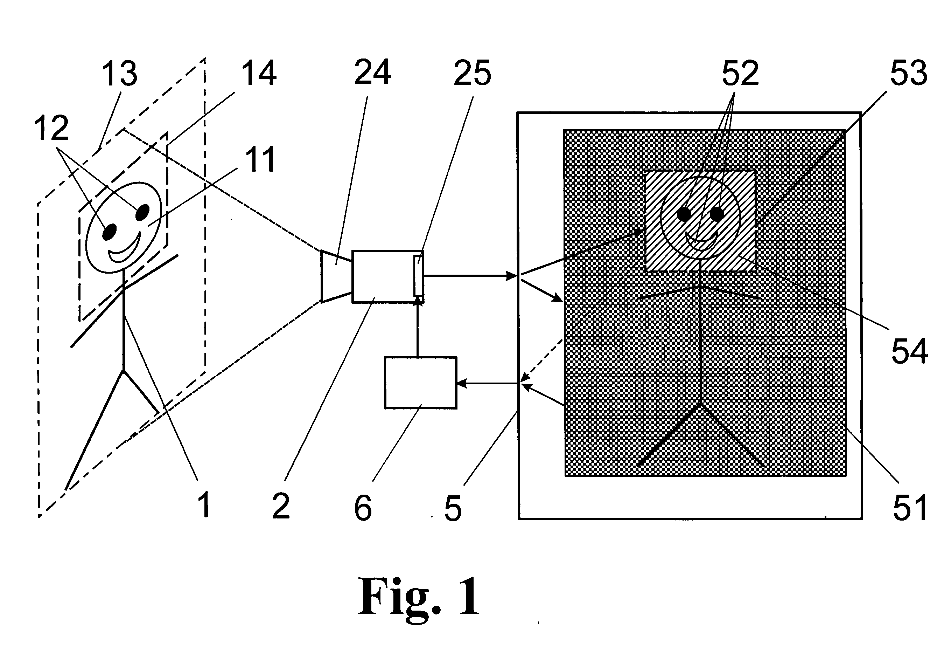

Die Erfindung, wie sie schematisch in Fig. 1 dargestellt ist, verwendet eine Kamera 2 mit Weitwinkelobjektiv 24 (vorzugsweise Fix-Fokus-Objektiv) die einen Bildsensor 25 aufweist, der eine Überblicksaufnahme der abgebildeten Szene im Gesamtbildfeld 13 der Kamera 2 aufnimmt. Der Bildsensor 25 muss so hochauflösend sein, dass er die Ansprüche an die Qualität von Personenaufnahmen erfüllt. Er kann im Hinblick auf seine Bildwiederholgeschwindigkeit (Bildrate) ein preiswerter CMOS-Sensor sein, der möglicherweise bei der Vollbildauslesung nicht die Fernsehnorm von 25 Bilder/s erfüllt, aber über eine sogenannte WOI-Einstellbarkeit (WOI - Window of Interest) verfügt. In der CMOS-Technologie wird diese Applikation je nach Hersteller auch "Region of Interest" oder "Windowing" genannt. In der CCD-Technologie haben sich Bezeichnungen wie "Fast Dump" für das Überspringen von Zeilen und "Overclocking" für das Übertakten der nicht benötigten Spalten etabliert. Ein typischer Vertreter solcher Sensoren in CMOS-Technologie ist der LM 9638 (Hersteller: National Semiconductors, Inc., USA) mit einer auslesbaren Gesamtbildgröße von 1280 x 1024 Pixeln.

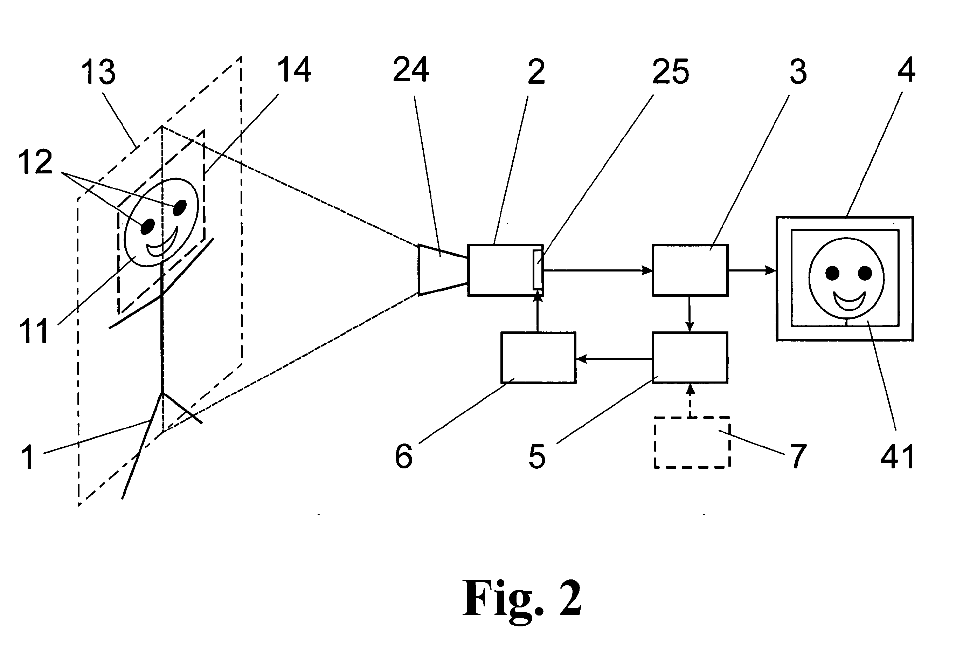

Ein derartiger Bildsensor 25 gestattet die Auslesung eines Teilbildes 54 gegenüber der Auslesung des Vollbildes 51 des Bildsensors 25 mit größerer Geschwindigkeit (Bildrate). Der Bildsensor 25 liefert im Grundmodus (Vollbildmodus) zunächst ein Vollbild 51 mit der vollen Pixelanzahl. Die Bildwiederholrate in diesem Grundmodus ist vergleichsweise gering, da eine große Anzahl von Pixeln ausgelesen werden muss. Bei Verwendung des LM 9638 beträgt die Pixelauslesefrequenz maximal 27 Mpixel/s, das ergibt nur achtzehn Vollbilder pro Sekunde. Das ausgelesene Bild gelangt vom Bildsensor 25 (im Falle des Sensors LM 9638 mit integriertem A/D-Wandler) digitalisiert in einen Bildspeicher (nur in Fig. 2 dargestellt). Der digitale Bildspeicher 3 soll in diesem Beispiel ein zweidimensionales Datenfeld mit der Dimension von 1280 × 1024 Datenwerten enthalten. Bei einer typischen Auflösung der Digitalisierung pro Pixelwert mit 256 Graustufen wird jedes Pixel in einem 1 Byte großen Datenwert gespeichert und der Bildspeicher 3 nachfolgend von zwei verschiedenen Einheiten (Anzeigeeinheit 4 und Bildauswerteeinheit 5) ausgelesen.

Wie Fig. 2 zeigt, erfolgt eine Auslesung durch die Anzeigeeinheit 4, die in bekannter Weise das Bild auf einem Bildschirm zur visuellen Darstellung bringt, so dass der Anwender das Bild betrachten kann. Dabei kann es notwendig sein, die Pixeldimension des ausgelesenen Bildes an die Pixeldimension des Bildschirms anzupassen. Dies geschieht typischerweise in der Anzeigeeinheit 4 selbst mit einem integrierten Skalierungsverfahren. Da dieser Schritt für die vorliegende Erfindung nicht von Bedeutung ist, wird auf Details nicht weiter eingegangen.

Parallel zur Bildschirmanzeige wird das Bild aus dem Bildspeicher 3 durch eine Bildauswerteeinheit 5 ausgelesen und auf das Vorhandensein eines menschlichen Gesichts 11 durchsucht. Derartige Verfahren sind aus dem Bereich der Gesichtserkennung bekannt und werden in Fachkreisen unter dem englischen Begriff "Face Finder" zusammengefasst. Zwei Verfahren sind beispielsweise in der US 5,835,616 (Lobo et al., "Face Detection Using Templates") und in der US 6,671,391 (Yong et al., "Pose-adaptive face detection system and process") beschrieben.
Da verschiedenste Face-Finder-Verfahren zur Realisierung der Erfindung anwendbar sind, soll auf Details solcher Verfahren hier nicht näher eingegangen, sondern im Weiteren lediglich vorausgesetzt werden, dass ein geeignetes derartiges Verfahren auf das gespeicherte Bild angewendet wird und - sofern ein Gesicht 11 im Bild vorhanden ist - als Ergebnis die Positionsangabe des Gesichtes 11 in einem ausgelesenen Vollbild 51 ausgegeben wird.

Werden im Ergebnis derartiger Objekterkennungsverfahren die Pixelkoordinaten als Zentralkoordinaten der signifikanten Objektmerkmale 52 (beim menschlichen Gesicht z.B. Abbilder von Augen 12, Nase und/oder Mund) geliefert, kann ein umschreibendes Rechteck 53, in dem das Gesicht 11 formatfüllend enthalten ist, durch Berechnung der Koordinaten der linken oberen und rechten unteren Ecke des Rechtecks 53 in geeigneter Weise angegeben werden. Es können stattdessen auch Koordinaten der Mittelpunkte der Augen 12 oder anderer Merkmale 52 sein, mit denen die Lage eines Gesichts 11 eindeutig beschreibbar ist, und zur Definition des auszulesenden Pixelbereichs des Bildsensors 25 verwendet werden.

Ein umschreibendes Rechteck 53, das die Kopfkontur bzw. das Gesicht 11 einer Person 1 einschließt, ist im Allgemeinen deutlich kleiner als das Gesamtbildfeld 13 der Kamera 2 (Vollbild 51 des komplett ausgelesenen Bildsensors 25) und lässt es zu, einen wesentlich kleineren Bildausschnitt 14 des Objekts (Teilbild 54 als ausgewähltes Pixelfeld des Bildsensors 25) auszulesen.
In diesem Beispiel ist - ohne Beschränkung der Allgemeinheit - das Weitwinkelobjektiv 24 der Kamera 2 so eingestellt, dass der Bildsensor 25 im Hochformat (z.B. rechteckige CMOS-Matrix, 1280 Pixel hoch und 1024 Pixel breit) betrieben wird und dabei eine Person (auch mit über 2 m Größe) im Bildfeld der Kamera 2 nahezu in voller Lebensgröße (aber ggf. unter Weglassung der Beine) abgebildet werden kann. Der Abstand der Person zur Kamera 2 kann für die häufigsten Anwendungen mit mindestens 1,5 m vorgegeben werden, so dass das Weitwinkelobjektiv 24 vorzugsweise ein Fix-Fokus-Objektiv sein kann, für das ab 1 m Entfernung alle Objekte stets scharf abgebildet werden. Es sind aber auch Autofokusobjektive sinnvoll einsetzbar.

Ein im Gesamtbildfeld 13 der Kamera 2 vorhandenes Gesicht 11 könnte beispielsweise 40 cm hoch und 25 cm breit sein und somit das umschreibende Rechteck 53 mit diesen Höhen- und Breitenangaben als ein Pixelformat auf dem Bildsensor 25 definiert werden. Das zum vollständigen Erfassen eines Gesichts 11 auszulesende Pixelformat beträgt (für dieses Beispiel des verwendeten Weitwinkelobjektivs 24 und der o.a. Gesichtsgröße) also lediglich 256 Pixel in der Höhe mal 160 Pixel in der Breite. Da die Anzahl der auszulesenden Pixel erheblich geringer als für das Vollbild 51 ist, läuft die Bildaufnahme bzw. Bildauslesung wesentlich schneller ab als zuvor. Die Bildwiederholfrequenz (Bildrate) ist deutlich erhöht und kann an beliebige Fernseh- oder VGA-Normen angepasst werden.
Im nächsten Schritt nach der Bestimmung des umschreibenden Rechtecks 53 werden die Einstellungen zur Lage und Größe des Bildausschnitts 14 von der Bildauswerteeinheit 5 an eine Sensorsteuereinheit 6 übergeben. Letztere stellt einerseits sicher, dass, wenn eine Umschaltung des Bildsensors 25 (von Vollbild- auf Teilbildauslesung und umgekehrt) erfolgt, alle Betriebsbedingungen des Bildsensors 25 eingehalten werden und zu keinem Zeitpunkt eine möglicherweise gerade laufende Bildaufnahme bzw. Bildauslesung des Bildsensors 25 in undefinierter Weise unterbrochen wird. Andererseits ist die Sensorsteuereinheit 6 auch dafür zuständig, die aktuell aus der Bildauswerteeinheit 5 als umschreibendes Rechteck 53 festgelegten Bildausschnitte (Teilbilder 14) als Auslesefenster (Teilbilder 54) in ein dafür vorgesehenes Register des Bildsensors 25 einzuschreiben. Der Bildsensor 25 liefert damit ständig auswertbare Vollbilder 51 und Teilbilder 54, wobei letztere - abhängig von der Gesichtserkennung in der Bildauswerteeinheit 5 - in ihrer Größe und Lage unterschiedlich sein können.

Ist der Bildsensor 25 in den Teilbildmodus umgeschaltet worden, wird er bei der nächsten Bildaufnahme nur noch das aktuell eingestellte Pixelfeld aus dem gesamten Bildfeld 13 des Bildsensors 25 erfassen (Teilbild 54). Diese Bildaufnahme bzw. Bildauslesung läuft wesentlich schneller ab als zuvor, da die Anzahl der Pixel erheblich geringer ist. Die Bildwiederholfrequenz steigt. Im Bildspeicher werden jetzt nur noch aktuelle Teilbilder zur Verfügung gestellt. Solange die Koordinaten des Teilbildes im Sensor nicht neu eingestellt werden, liefert die Kamera nur Bilder mit diesem Format und in dieser Lage, so dass auf dem Bildschirm lediglich der im Gesamtbildfeld des Sensors aufgefundene Kopf (Gesicht) der Person zur Anzeige gebracht wird.

In einer zweiten Realisierungsvariante der Erfindung ist die Kamera 2 so ausgebildet, dass sie alle Komponenten bis einschließlich des Bildspeichers 3 enthält und statt der direkten Ankopplung einer Anzeigeeinheit 4 die ausgelesenen Bilder in digitaler Form über eine Ausgabeeinheit 8 (z.B. geeignete Datenschnittstelle) an einen Computer bereitstellt.
Eine solche Kamera 2 wird - genauso wie oben bereits beschrieben - zunächst Gesichter 11 von Personen 1 im Vollbild 51 suchen und - sobald ein Gesicht 11 erkannt wurde - den Bildsensor 25 auf den Teilbildmodus umschalten. Im Teilbildmodus liefert die Kamera 2 dann Teilbilder 54, die formatfüllend ein Gesicht 11 enthalten. Die Ausgabeeinheit 8 kann eine standardisierte Computerschnittstelle, wie z.B. Ethernet oder USB, sein.

In einer weiteren Ausgestaltung wird in der Bildauswerteeinheit 5 zusätzlich ein Verfahren zur Nachverfolgung eines sich bewegenden Gesichts 11 im Teilbild 54 verwendet.
Nachdem im ersten Schritt im Vollbildmodus das Gesicht 11 gefunden und daraufhin in den Teilbildmodus umgeschaltet wurde, kann es sein, dass sich die Person weiter bewegt und dadurch das Gesicht 11 aus dem Bereich des Teilbildes 54 hinauswandert. Das widerspricht natürlich dem gewollten Zweck der formatfüllenden Gesichtsaufnahme.
Daher wird in der Bildauswerteeinheit 5 zusätzlich ein Algorithmus zur Nachführung des Bildausschnitts 14 bzw. der Pixelkoordinaten des Teilbildes 54 verwendet, der dann im Teilbildmodus ermittelt, wo sich das Gesicht 11 befindet bzw. in welche Richtung es sich bewegt. Sollte dieser Algorithmus erkennen, dass sich die zur Berechnung des umschreibenden Rechtecks 53 verwendeten Koordinaten der Objektmerkmale 52 (z.B. Mittelpunkte der Augen 12) in eine bestimmte Richtung zwischen zwei aufeinanderfolgenden Teilbildern 54 bewegt haben, wird aus der Verschiebung der Objektmerkmale 52 (vorzugsweise Augen 12) eine Korrektur der Koordinaten des umschreibenden Rechtecks 53 und somit des Teilbildes 54 im Pixelraster des Bildsensors 25 abgeleitet und die korrigierten Koordinaten an die Sensorsteuereinheit 6 übergeben. Nachfolgend erfasst der Bildsensor 25 also das Gesicht 11 der Person 1 mit den korrigierten Koordinaten und das Gesicht 11 verbleibt somit vollständig (und formatfüllend) innerhalb des in der Anzeigeeinheit 4 oder über die Ausgabeeinheit 8 ausgegebenen Teilbildes 54.

Es kann jedoch auch passieren, dass die Person den Gesamtbildbereich 13 (Vollbild 51) der Kamera 2 verlässt. In diesem Fall erreicht das umschreibende Rechteck 53 die Außenkanten des Vollbildes 51, so dass das ausgelesene Teilbild 54 gegenüber dem Vollbild 51 des Bildsensors 25 nicht weiter verschoben werden kann. Deshalb wird in einer weiteren Ausgestaltung der Erfindung das Erreichen oder Überschreiten der Bildkanten des Teilbildes 54 gegenüber denen des Vollbildes 51 überprüft und in einem solchen Fall mittels der Sensorsteuereinheit 6 wieder in den Vollbildmodus zurückgeschaltet.
Der Bildsensor 25 wird also wieder mit seinem vollen Pixelfeld (Vollbild 51) ausgelesen und die Bildauswerteeinheit 5 beginnt von Neuem im nächsten ausgelesenen Vollbild 51 nach signifikanten Objektmerkmalen 52 eines Gesichts 11 zu suchen. Sobald diese Suche Erfolg hatte, setzt das Verfahren an der oben bereits beschriebenen Stelle der Auslesung von Teilbildern 54 fort.

Zur Erhöhung der Bildrate im Vollbildmodus, die bei Auslesung aller Pixel des oben angegebenen hochauflösenden Bildsensors 25 nur 18 Bilder/s beträgt und somit nicht fernsehnormtauglich ist, wird im Vollbildmodus zweckmäßig mit reduzierter Auflösung gearbeitet, d.h., dass nur jedes zweite oder jedes vierte Pixel der Zeilen und nur jede zweite bzw. jede vierte Zeile im Vollbild 51 ausgelesen wird. Das führt bezüglich des Gesamtbildfeldes 13 bei der Abbildung der Überblicksszene im Vollbildmodus zwar zu einer Verringerung der Bildauflösung, die für die Erkennung von Merkmalen eines Gesichts 11 oder anderer signifikanter Objektmerkmale aber durchaus tolerierbar ist, sowie zusätzlich zu einem Geschwindigkeitsvorteil, durch den eine höhere Bildrate (z.B. die der Fernsehnorm) erreicht wird.

Weiterhin kann es vorkommen, dass eine Person 1 sich so dreht, dass ihr Gesicht 11 nicht mehr (oder nicht mehr vollständig) zu sehen ist. In diesem Fall werden die meisten Face-Finder-Algorithmen erkennen, dass kein Gesicht 11 mehr im Bild vorhanden ist. Aufgrund dieses Ergebnisses der Bildauswertung schaltet die Sensorsteuereinheit 6 den Bildsensor 25 in den Vollbildmodus zurück und die Bildauswerteeinheit 5 wird wieder im ausgelesenen Vollbild 51 nach dem Gesicht 11 derselben oder einer anderen Person 1 suchen.

Die gleichmäßige Ausleuchtung des Gesichts 11 der Person 1 kann in der Praxis sehr schwierig sein, wenn beispielsweise dafür keine gesonderten Lampen in der Nähe der Kamera 2 vorgesehen werden können und nur das vorhandene Umgebungslicht verwendet werden soll. Besonders schwierig sind Situationen, in denen sich die aufzunehmende Person 1 vor einem sehr hellen Hintergrund, also im Gegenlicht, befindet.
Bei eingestellter Überblicksaufnahme über das Gesamtbildfeld 13 (Vollbild 51) würde die Kamera 2 in diesem Fall die Empfindlichkeit (Shutterzeit des Sensors, Blende des Objektivs, Verstärkung des Bildsignals) so einstellen, dass im Mittel über alle Objekte 1 im Vollbild 51 eine durchschnittliche Helligkeit erzielt wird. Das kann dazu führen, dass das Gesicht 11 einer Person 1 viel zu dunkel erscheint und dadurch Details schwer erkennbar sind, die für die spätere Identifizierung von Bedeutung sind.
Deshalb wird in einer weiteren Ausgestaltung die Bildauswerteeinheit 5 derart erweitert, dass in den ablaufenden Gesichtserkennungsalgorithmus (Face Finder) ein zusätzlicher Schritt aufgenommen wird, bei dem im bereits aufgefundenen Gesicht 11 (und unter Weglassen des Hintergrunds um das Gesicht 11 herum) die vorhandene Helligkeit ermittelt wird. Sollte diese von einem als optimal vorgegebenen Wert abweichen (also z.B. zu dunkel sein), dann wird neben den Koordinaten des einzustellenden Teilbildes 54 auch eine geeignete Steuerinformation für die Empfindlichkeitseinstellungen der Kamera 2 (Blendeneinstellung, elektronische Verschlusszeitregelung und Verstärkung des (sensorintegrierten) A/D-Wandlers ermittelt und an die Sensorsteuereinheit 6 übergeben. Die Sensorsteuereinheit 6 stellt damit die Kamera 2 auf die neue Empfindlichkeit ein, so dass der nachfolgend aufgenommene Bildausschnitt 14 nicht nur formatfüllend das Gesicht 11 enthält, sondern auch eine optimale Helligkeit bei der Auslesung des Teilbildes 54 erzielen wird.
Dieses Prinzip kann so erweitert werden, dass die Helligkeit auch im Teilbildmodus laufend ermittelt wird und gegebenenfalls die Helligkeitseinstellungen der Kamera 2 nachgeführt werden, um das Gesicht 11 stets in optimaler Helligkeit zu haben. Das ist insbesondere in Kombination mit der örtlichen Nachführung des auszulesenden Teilbildes 54 von Bedeutung, wenn sich die Person 1 bewegt und dabei der durch nachgeführte Teilbildkoordinaten ausgelesene Bildausschnitt 14 auch Bereiche mit unterschiedlich heller Ausleuchtungs- oder Gegenlichtsituation überstreicht.

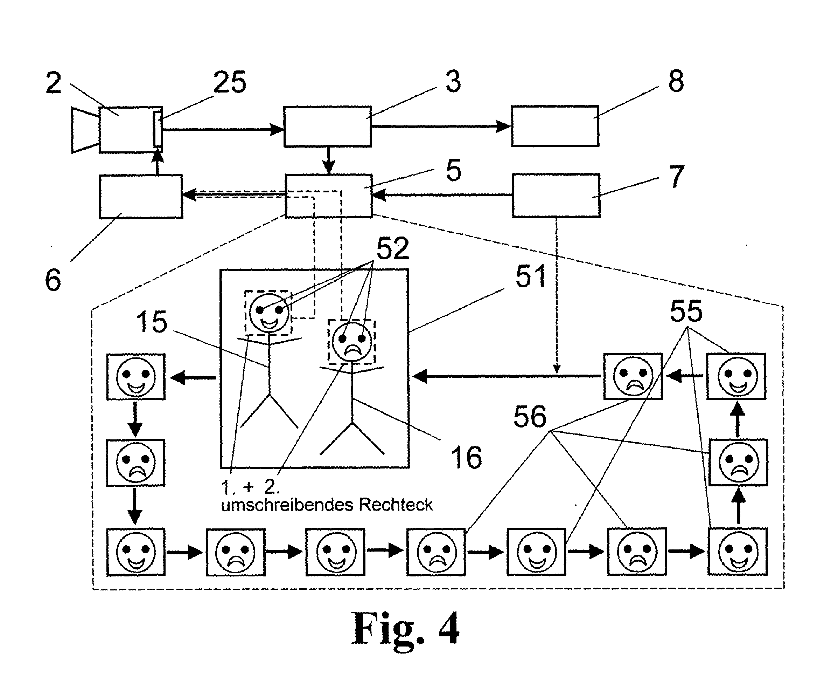

Eine weitere Ausgestaltung des erfindungsgemäßen Gedankens betrifft eine Situation gemäß Fig. 4, bei der sich mehrere Personen 1 im Gesamtbildfeld 13 der Kamera 2 (Vollbildmodus) befinden. Die Bildauswerteeinheit 5 kann dafür gegenüber einem herkömmlichen Algorithmus eines (beliebigen) "Face-Finders" so ergänzt sein, dass erkannte Gesichter 11 nur dann als Ergebnis ausgegeben werden, wenn Schwellwerte aus zusätzlichen vordefinierten Gütekriterien erfüllt sind. Solche Gütekriterien können z.B. eine bestimmte Mindestgröße für Gesichter 11 vorgeben (d.h. dass sie hinreichend nah vor der Kamera 2 sind) oder eine bestimmte Sichtbarkeit der Augen 12 fordern (d.h. dass der Kopf nicht seitlich gedreht ist, sondern das Gesicht 11 annähernd frontal der Kamera 2 zugewendet ist). Dabei kann die maximale Anzahl der aufzufindenden Gesichter 11 begrenzt werden, um beispielsweise nicht mehr als drei Personen 1 gleichzeitig zu erkennen und deren Gesichter 11 aufzunehmen.
Zu diesem Zweck wird in die Bildauswerteeinheit 5 ein weiterer Schritt integriert, in dem zunächst im Vollbildmodus die Anzahl der Gesichter 11 ermittelt und, sofern es mehr als die maximal zulässige Anzahl sind, aus dem Vollbild 51 nur die Daten derjenigen Gesichter 11, die die beste Qualität (Größe, Helligkeit etc.) aufweisen, weiter verarbeitet. Zu jedem dieser Gesichter 11 wird dann, wie in den bisherigen Beispielen, ein umschreibendes Rechteck 53 ermittelt. Danach folgt eine von der obigen Verfahrensweise abweichende Verarbeitungsroutine.

Da bei jeder Auslesung des Bildsensors 25 nur ein Bildausschnitt 14 gewählt, d.h. nur ein Teilbild 54 ausgelesen werden kann, werden nun einzeln nacheinander die definierten umschreibenden Rechtecke 53 als Pixelvorgaben von der Sensorsteuereinheit 6 wiederholt an den Bildsensor 25 geliefert und jeweils eine Sequenz von Teilbildern 54 (gemäß Fig. 4 nur Zweier-Sequenz der Teilbilder 55 und 56) mit unterschiedlichen Positionen (und eventuell verschiedenen Größen) ausgelesen.
Dies geht immer noch erheblich schneller, als wenn das Pixelformat des gesamten Bildsensors 25 vollständig ausgelesen wird. Die Kamera 2 kann somit in einem repetierenden Multiteilbildmodus betrieben werden, in dem sie - entsprechend dem Beispiel von Fig. 4 - jeweils in Folge die Teilbilder 55 und 56 der zwei erkannten Personen 15 und 16 liefert. Beiden Personen 15 und 16 sind über ihre signifikanten Objektmerkmale 52 ein erstes und ein zweites umschreibendes Rechteck 53 zugeordnet, aus deren wiederholter Einschreibung in den Bildsensor 25 die abgebildete abwechselnde Folge von ersten und zweiten Teilbildern 55 und 56 entsteht, von durch geordnete Ablage im Bildspeicher 3 sogar jeweils Livebilder der Gesichter 11 der erfassten Personen 15 und 16 an die Bildausgabeeinheit 8 weitergeleitet und gegebenenfalls auf getrennten Monitoren (Anzeigeeinheiten 4, in Fig. 4 nicht gezeichnet) angezeigt werden können.

Erst wenn in einem dieser Teilbilder 55 und 56 ein Abbruchkriterium (Person 1 hat das Gesamtbildfeld 13 der Kamera 2 verlassen oder sich umgedreht) erkannt wird, schaltet die Bildauswerteeinheit 5 in den Vollbildmodus zurück und prüft, ob sich neben den noch in der Verfolgung befindlichen Gesichtern 11 (Ausschnitte 14) noch eine weitere Person 1 im Gesamtbildfeld 13 der Kamera 2 befindet, deren Gesicht 11 die Gütekriterien der Gesichtserkennung erfüllt. Ist das der Fall, wird das entsprechende neue Teilbild 54 in den Multiteilbildmodus mit aufgenommen, andernfalls wird nur mit dem zuvor noch vorhandenen Teilbild 55 oder 56 weiter gearbeitet.
Diese Routine kann noch soweit modifiziert werden, dass die Kamera 2 regelmäßig, beispielsweise einmal pro Sekunde, in den Vollbildmodus zurückschaltet, um diese Überprüfung auf neu hinzugekommene Personen 1 durchzuführen. Dazu wird eine Ablaufsteuerungseinheit 7 verwendet, die einen Zeitgeber enthält und von diesem abgeleitet die Bildauswerteeinheit 5 zwischen Vollbild- und Teilbildauswertung zyklisch umschaltet oder den Multiteilbildmodus nach einer bestimmten Anzahl von Teilbildern 54, 55 bzw. 56 abbricht.

### Bezugszeichenliste

- 1: Objekt/Person
- 11: Gesicht
- 12: Auge
- 13: Gesamtbildfeld (der Kamera)
- 14: Bildausschnitt
- 15, 16: Personen (verschiedene in einem Gesamtbildfeld)

- 2: Kamera
- 21: Zoomobjektiv
- 22: motorischer Antrieb zum Schwenken und Zoomen
- 23: Bedieneinheit für motorischen Antrieb
- 24: Weitwinkelobjektiv
- 25: (hochauflösender) Bildsensor

- 3: Bildspeichereinheit

- 4: Bildanzeigeeinheit
- 41: aktueller Bildausschnitt

- 5: Bildauswerteeinheit
- 51: Vollbild
- 52: Objektmerkmal
- 53: umschreibendes Rechteck
- 54: Teilbild
- 55: erstes Teilbild
- 56: zweites Teilbild

- 6: Sensorsteuereinheit
- 7: Ablaufsteuereinheit
- 8: Bildausgabeeinheit

## Patentansprüche

1. Verfahren zur Aufnahme interessierender Bereiche von beweglichen oder wechselnden Objekten (1), vorzugsweise von Personen, bei dem mit einem aus einem Bildsensor (25) ausgelesenes Bild ein interessierender Bereich des Objekts (1) für das Ausgabeformat bildfüllend verfolgt wird, **dadurch gekennzeichnet, dass**
- der Bildsensor (25) umschaltbar in einem Vollbild- und einem Teilbildmodus betrieben wird, wobei im Vollbildmodus über ein Weitwinkelobjektiv (24) ein Vollbild (51) als feststehende Überblicksaufnahme und im Teilbildmodus der interessierende Bereich (11) des Objekts (1) aufgenommen werden,
- das im Vollbildmodus erfasste Vollbild (51) mittels einer Bildauswerteeinheit (5) auf Vorhandensein und Lage vorgegebener Objektmerkmale (52), vorzugsweise des Gesichts einer Person (11), analysiert wird und aus der Lage von aufgefundenen Objektmerkmalen (52) ein umschreibendes Rechteck (53) um den durch die aufgefundenen Objektmerkmale (52) definierten interessierenden Bereich (11) des Objekts (1) bestimmt wird,
- das aktuell ermittelte umschreibende Rechteck (53) als Begrenzung eines programmierbaren Auslesefensters des Bildsensors (25) verwendet wird und
- im Teilbildmodus auf Basis des aktuell eingestellten Auslesefensters des Bildsensors (25) eine Folge von Teilbildern (54), die den interessierenden Bereich (11) des Objekts (1) formatfüllend enthalten, mit hoher Bildrate ausgelesen wird.

2. Verfahren nach Anspruch 1, **dadurch gekennzeichnet, dass**
- im Teilbildmodus ausgelesene Teilbilder (54) darauf analysiert werden, ob sich vorgegebene Objektmerkmale (52) in nacheinander ausgelesenen Teilbildern (54) bewegen, und
- bei erkannter Verschiebung der Objektmerkmale (52) die Lage des umschreibenden Rechtecks (53) angepasst verschoben wird, um den interessierenden Bereich (11) des Objekts (1) vollständig innerhalb des nachfolgend ausgelesenen Teilbildes (54) zu halten.

3. Verfahren nach Anspruch 2, **dadurch gekennzeichnet, dass**
- in den Vollbildmodus zurückgeschaltet wird, wenn eine Grenze des das verschobene Teilbild (54) umschreibenden Rechtecks (53) den Rand der Vollbildaufnahme (51) erreicht oder überschreitet, und
- erneut die Existenz und die Lage der vorgegebenen Objektmerkmale (52) bestimmt wird.

4. Verfahren nach Anspruch 2, **dadurch gekennzeichnet, dass**
- in den Vollbildmodus zurückgeschaltet wird, wenn wenigstens ein zur Bestimmung des umschreibenden Rechtecks (53) verwendetes Objektmerkmal (52) im Teilbild (54) verschwindet, und
- erneut die Existenz und die Lage von Objektmerkmalen (52) bestimmt wird.

5. Verfahren nach Anspruch 1, **dadurch gekennzeichnet, dass**
- zusätzlich zur Lage auch die Helligkeit des Objektmerkmals (52) im Bild (51; 54) ermittelt wird,
- ein Vergleich mit einer als optimal definierten Referenzhelligkeit vorgenommen wird und
- bei Abweichungen von der Referenzhelligkeit eine Anpassung durch Änderung der Empfindlichkeitseinstellungen des Bildsensors (25) erfolgt.

6. Verfahren nach Anspruch 5, **dadurch gekennzeichnet, dass**
bei einem festgestellten Helligkeitsdefizit des ausgelesenen Teilbildes (54) gegenüber der Referenzhelligkeit die Verstärkung der A/D-Wandlung des Bildsensorsignals erhöht wird.

7. Verfahren nach Anspruch 5, **dadurch gekennzeichnet, dass**
bei einem festgestellten Helligkeitsdefizit des ausgelesenen Teilbildes (54) gegenüber der Referenzhelligkeit die elektronische Verschlusszeit des Bildsensors (25) geändert wird.

8. Verfahren nach Anspruch 5, **dadurch gekennzeichnet, dass**
bei einem festgestellten Helligkeitsdefizit des ausgelesenen Teilbildes (54) gegenüber der Referenzhelligkeit die elektronische Verschlusszeit des Bildsensors (25) geregelt und die Verstärkung der A/D-Wandlung des Bildsensorsignals erhöht wird.

9. Verfahren zur Aufnahme interessierender Bereiche von beweglichen oder wechselnden Objekten (1), vorzugsweise von Personen, bei dem mit einem aus einem Bildsensor (25) ausgelesenes Bild ein interessierender Bereich eines Objekts (1) für das Ausgabeformat (41) bildfüllend verfolgt wird, **dadurch gekennzeichnet, dass**
- der Bildsensor (25) sequenziell umschaltbar in einem Vollbild- und einem Teilbildmodus betrieben wird, wobei im Vollbildmodus ein Vollbild (51) als feststehende Überblicksaufnahme gemacht wird und im Teilbildaufnahmemodus der interessierende Bereich eines Objekts (1) aufgenommen wird,
- das im Vollbildaufnahmemodus erfasste Vollbild (51) mittels einer Bildauswerteeinheit (5) auf Vorhandensein und Lage vorgegebener definierter Objektmerkmale (52), vorzugsweise Gesichter (11) von Personen, analysiert wird und aus der Lage von aufgefundenen vorgegebenen Objektmerkmalen (52) umschreibende Rechtecke (53) um durch die vorgegebenen Objektmerkmale (52) definierten interessierenden Bereiche (11) von allen aufgefundenen Objekten (1) bestimmt wird,
- für alle Objekte (1), vorzugsweise mehrere Personen (15; 16), die mit dem Bildsensor (25) im Vollbildmodus erfasst wurden die aktuell ermittelten umschreibenden Rechtecke (53) als Begrenzung unterschiedlicher programmierbarer Auslesefenster des Bildsensors (25) verwendet werden,
- im Teilbildaufnahmemodus auf Basis der aktuell eingestellten Mehrzahl von Auslesefenstern der Bildsensor (25) in einen repetierenden Multiteilbildaufnahmemodus mit den ermittelten umschreibenden Rechtecken (53) geschaltet wird und Bildsequenzen von Teilbildern (54; 55; 56)) mit jeweils formatfüllend ausgelesenen interessierenden Bereichen (11) der Objekte (1) ausgegeben werden.

10. Verfahren nach Anspruch 9, **dadurch gekennzeichnet, dass**
der repetierende Multiteilbildaufnahmemodus beendet und der Bildsensor (25) in den Vollbildaufnahmemodus zurückgeschaltet wird, wenn in einem der Teilbilder (54; 55; 56) wenigstens ein vorgegebenes Objektmerkmal (52) verschwunden ist,
und im Vollbild (51) erneut Vorhandensein und Lage die interessierenden Bereiche (11) von Objekten (1) bestimmt werden, um in einem neuen repetierenden Multiteilbildmodus aktuelle interessierende Bereiche (11) formatfüllend auszugeben.

11. Verfahren nach Anspruch 9, **dadurch gekennzeichnet, dass**
der repetierende Multiteilbildaufnahmemodus nach einer vorbestimmten Zeit beendet und der Bildsensor (25) in den Vollbildaufnahmemodus zurückgeschaltet wird, im Vollbild (51) erneut Vorhandensein und Lage die interessierenden Bereiche (11) von Objekten (1) bestimmt werden, um in einem neuen repetierenden Multiteilbildmodus aktuelle interessierende Bereiche (11) formatfüllend auszugeben.

12. Anordnung zur Durchführung des Verfahrens nach Anspruch 1 oder 9, enthaltend eine Kameraanordnung mit einem Objektiv, einem Bildsensor (25), einer Bildsensorsteuereinheit (6), einer Bildspeichereinheit (3) und einer Bildausgabeeinheit (4), **dadurch gekennzeichnet, dass**
- das Objektiv ein Weitwinkelobjektiv (24) ist,
- der Bildsensor (25) ein Sensor mit variabel programmierbarem Auslesefenster ist, der bei Auslesung eines programmierten Teilbildes (54) die volle örtliche Auflösung, aber gegenüber dem Vollbildauslesemodus eine wesentlich verkürzte Auslesezeit aufweist, und zwischen Vollbild- und Teilbildmodus beliebig umschaltbar ist,
- eine Bildauswerteeinheit (5) zur Auswertung der im Vollbildmodus aufgenommenen Vollbilder (51) vorgesehen ist, wobei aus den Vollbildern (51) das Vorhandensein und die Lage vorgegebener definierter Objektmerkmale (52) bestimmbar und aus der Lage von aufgefundenen Objektmerkmalen (52) um die Objektmerkmale (52) herum interessierende Bereiche (11) in Form eines umschreibenden Rechtecks (53) definiert sind, und
- die Bildauswerteeinheit (5) über eine Sensorsteuereinheit (6) mit dem Bildsensor (25) in Verbindung steht, um die berechneten umschreibenden Rechtecke (53) zur variablen Steuerung des Auslesefensters im Teilbildmodus des Bildsensors (25) zu verwenden.

13. Anordnung nach Anspruch 12, **dadurch gekennzeichnet, dass**
das Weitwinkelobjektiv (24) ein Fix-Fokus-Objektiv ist.

14. Anordnung nach Anspruch 13, **dadurch gekennzeichnet, dass**
das (24) ein Fix-Fokus-Objektiv ist, wobei der Fokus weniger als 1,5 m vor der Kamera liegt.

15. Anordnung nach Anspruch 12, **dadurch gekennzeichnet, dass**
das Weitwinkelobjektiv (24) ein Auto-Fokus-Objektiv ist.

16. Anordnung nach Anspruch 12, **dadurch gekennzeichnet, dass**
der Bildsensor (25) ein hochauflösendes CMOS-Array ist.

17. Anordnung nach Anspruch 12, **dadurch gekennzeichnet, dass**
der Bildsensor (25) bei Vollbildauslesung aller Pixel eine niedrige Bildrate aufweist.

18. Anordnung nach Anspruch 12, **dadurch gekennzeichnet, dass**
die Bildauswerteeinheit (5) Mittel zum Erkennen von Gesichtern (11) von Personen (1) enthält.

19. Anordnung nach Anspruch 18, **dadurch gekennzeichnet, dass**
die Bildauswerteeinheit (5) zusätzliche Mittel zum Bewerten der Qualität von aufgefundenen Gesichtern (11) aufweist.

20. Anordnung nach Anspruch 19, **dadurch gekennzeichnet, dass**
die Bildauswerteeinheit (5) Mittel zum Bewerten der Helligkeit des ausgelesenen Teilbildes (54) in Bezug auf die reinen Gesichtsmerkmale (12) aufweist.

21. Anordnung nach Anspruch 19, **dadurch gekennzeichnet, dass**
die Bildauswerteeinheit (5) Mittel zum Bewerten der Größenverhältnisse von vorgegebenen Objektmerkmalen (12) aufweist.

22. Anordnung nach Anspruch 19, **dadurch gekennzeichnet, dass**
eine zusätzliche Ablaufsteuereinheit (7) zur Beeinflussung der Bildauswerteeinheit (25) vorhanden ist, wobei die Ablaufsteuereinheit (7) einen Taktzyklus zur zyklischen Umschaltung der Bildauswerteeinheit (5) zwischen Vollbild- und Teilbildauswertungen aufweist.
